(19) Europäisches Patentamt / European Patent Office / Office européen des brevets

(11) **EP 3 522 114 B1**

(12) **EUROPEAN PATENT SPECIFICATION**

(45) Date of publication and mention
of the grant of the patent:
**07.10.2020 Bulletin 2020/41**

(51) Int Cl.:
***G06T 7/20*** (2017.01)

(21) Application number: **19155217.3**

(22) Date of filing: **04.02.2019**

(54) **METHOD, DEVICE AND SYSTEM FOR TIME ALIGNING A FRAME OF A VIDEO STREAM WITH RESPECT TO REFERENCE FRAMES OF A REFERENCE VIDEO STREAM**

VERFAHREN, VORRICHTUNG UND SYSTEM ZUM ZEITLICHEN AUSRICHTEN EINES BILDS EINES VIDEOSTREAMS IN BEZUG AUF REFERENZBILDER EINES REFERENZVIDEOSTREAMS

PROCEDE, DISPOSITIF ET SYSTEME D'ALIGNEMENT TEMPOREL D'UNE IMAGE D'UN FLUX VIDEO PAR RAPPORT À DES IMAGES DE REFERENCE D'UN FLUX VIDEO DE REFERENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2018 EP 18305114**

(43) Date of publication of application:
**07.08.2019 Bulletin 2019/32**

(73) Proprietor: **InterDigital CE Patent Holdings**
**75017 Paris (FR)**

(72) Inventors:
 • **BAILLARD, Caroline**
  **35576 Cesson-Sévigné (FR)**
 • **SERVANT, Fabien**
  **35576 Cesson-Sévigné (FR)**
 • **LUO, Tao**
  **35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(56) References cited:
**US-B1- 6 297 852**

 • **KAWAKITA HIROYUKI ET AL: "Augmented TV: An augmented reality system for TV programs beyond the TV screen", 2014 INTERNATIONAL CONFERENCE ON MULTIMEDIA COMPUTING AND SYSTEMS (ICMCS), IEEE, 14 April 2014 (2014-04-14), pages 955-960, XP032651652, DOI: 10.1109/ ICMCS.2014.6911158**
 • **GOSHIRO YAMAMOTO ET AL: "Imperceptible On-Screen Markers for Mobile Interaction on Public Large Displays", IEICE TRANSACTIONS ON INFORMATION AND SYSTEMS., vol. E100.D, no. 9, 1 January 2017 (2017-01-01), pages 2027-2036, XP055492153, JP ISSN: 0916-8532, DOI: 10.1587/transinf.2016PCP0015**

EP 3 522 114 B1

**Description**

**1. Technical field**

The present disclosure relates to the field of video processing. More specifically, the present disclosure relates to computer vision. More particularly, the methods and devices proposed in the present disclosure are adapted for time aligning a current frame of a current video stream with respect to reference frames of a reference video stream.

**2. Background**

A major field of computer vision is the camera pose estimation. Several situations may occur for which estimating the pose of the camera is of importance. This is for example the case for augmented reality or for mixed reality. Usually, estimating the pose of a camera consists in estimating the position and/or orientation of the camera. This is important for example when the camera is moving during the video processing tasks.

The prior art document "Augmented TV: An augmented reality system for TV programs beyond the TV screen", Kawakita Hiroyuki et al, International Conference on Multimedia Computing and Systems 2014, and the prior art document "Imperceptible On-Screen Markers for Mobile Interaction on Public Large Displays" , Goshiro Yamamoto et al, IEICE Transactions on Information and Systems, 2017, disclose video time aligning methods for augmented reality applications that are based on markers.

The patent publication US 6 297 852 B1 discloses a video time aligning method based on timer clock data. Z

**3. Summary**

It is disclosed a method for time aligning a current frame of a current video stream with respect to reference frames of a reference video stream according to claim 1, a corresponding device according to claim 2 and a computer program product according to claim 12.

**4. Brief description of the drawings**

- figure 1 is a schematic block diagram illustrating the method for time alignment of a current frame with reference frames;
- figure 2 illustrates a system for carrying out the method;
- figure 3 illustrates a device for implementing the disclosed method.

**5. Description**

5.1. General principle

For augmented reality, it is recommended to properly insert virtual objects in the real scene: the virtual camera used to render objects must be "aligned" with the real camera. The augmentation of the quality of the insertion is directly correlated with the quality of the camera's pose estimation.

The camera pose is commonly estimated with respect to some reference geometric frame(s). The estimated camera pose will be a rigid transformation between this reference frame(s) and the camera geometric frame(s).

Usually, the reference frame must be known a priori to enable offline edition of the augmented reality scenario. This means that either the environment is known or some fixed recognizable object (with a known pose) is visible in the camera point of view, so that the processing may be done in view of this fixed recognizable object.

Current production grade augmented reality systems are using planar recognizable objects known as markers. These markers are designed to be easily recognizable by a camera sensor (their content is unique and texture-rich) and are typically printed on sheets of papers.

Several solutions exist, based on static templates, and work for known situations, where the static template is visible and where the static template may be easily recognized among the other objects of the scene. However, the first problem of these solutions is the necessity of having these static templates: this is not convenient for a home use of these solutions because the user needs to position these templates before using the augmented reality application, which may lead to a quite deceptive experience. Additionally, in many scenarios, including living room usage (moreover in dark lighting conditions), these static templates are either not correctly perceived or not perceived at all. This implies that the augmented reality application will not work properly or not work at all.

Solutions have been proposed for estimating the pose of the camera by using a display, on which reference frames are displayed, these reference frames being captured by a camera and correlated with the reference frames. However, this smart solution may be limited by the usually reduced resources of the processing device (usually a smartphone or a tablet). One aspect of this pose estimation method is related to the time alignment of the captured frames with the reference frames.

Indeed, the frames displayed on the display may be used as reference pattern to be tracked in the image by a template based homography tracker. However, camera and display panel (i.e. television) are not synchronized: acquired frames may contain a linear combination of two or more reference images. It is thus necessary to quickly estimate which reference frames combination is displayed (and captured) by the processing device. One solution is to artificially create images, based on two or more reference frames, so as to create intermediate references frames which may be compared to the acquired current frame (i.e. the frame acquired by the camera). However, the complexity obviously increases linearly with the number of intermediate references frames. On the other side, reducing the number of intermediate images may reduce the matching robustness. Additionally, this simple method necessitates the use of many resources which may not be available in the processing device.

Thus, there's a need for having a frame time aligning method and device which do not have these drawbacks of prior art techniques.

The disclosure allows producing a fast and efficient time aligning for determining which of said reference frames corresponds to said current frame.

The general principle of the disclosure consists in optimizing the way reference data are obtained. Previously, reference data were obtained using static templates which were positioned in the shooting area of the camera: the static templates were shot by the camera giving reference data in the frames shot by the camera, thus leading, by a computational process, to an estimation of the camera pose (usually as a function of the planar surface of the static templates). According to the present disclosure, reference data are obtained from video frames which are displayed on a display device. The global computational process consists in estimating the camera pose in view of these reference data which are called reference frames.

Thus, thanks to this technique, it is possible to precisely estimate the pose of the camera without needing any static template. This leads to a better service rendered by the various applications that may need an estimation of a pose of a camera, because the user is not required to install any additional component. This also leads to better results in dark or shadowed conditions since it is supposed that the camera shoot (at least partially) a display device which emits light. Thus even in dark, the proposed solution ensures that sufficient light is present in order to allow at least a partially captures of the pictures by the shooting camera. In this context, more precisely, the object of the disclosure is to describe a method for temporally aligning a current frame (noted Lc) with respect to reference frames (F).

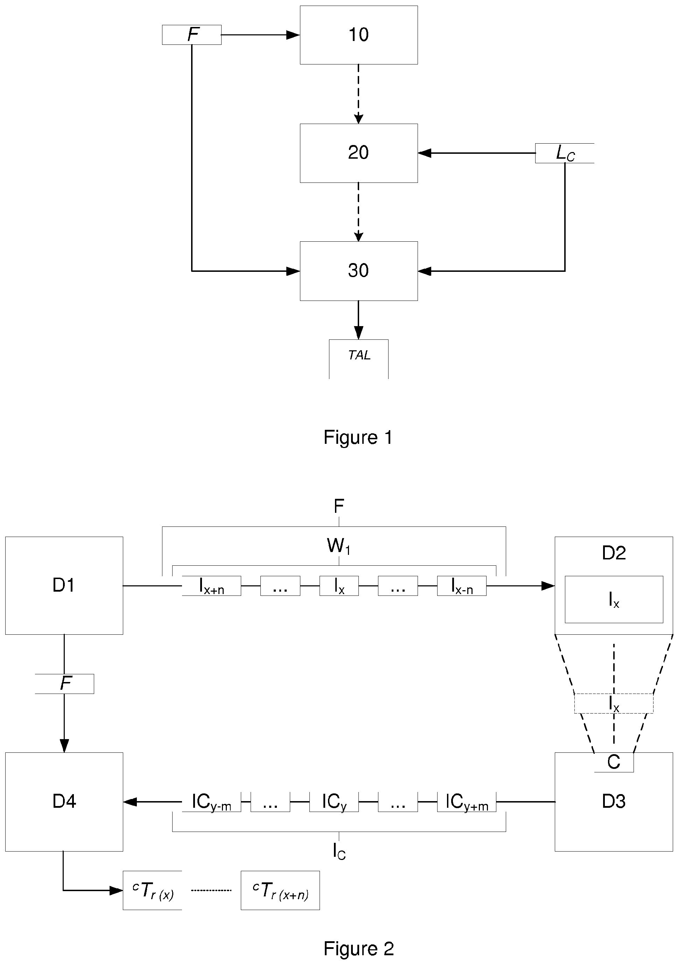

Figure 1 exposes the main steps of the proposed technique. It is disclosed a method for time aligning a current frame of a current video stream with respect to reference frames of a reference video stream, said current video stream corresponding to at least one part of said reference video stream. In the context of the disclosure, the current video stream may not be time aligned with the reference video stream. The method comprises:

- obtaining (10) at least two reference frames (F) corresponding to at least part of at least some of multiple displayed frames displayed on a display;
- obtaining (20) current frame (Lc) from images of said displayed frames captured with a camera by shooting said display;
- determining (30) a time alignment (TAL) of said current frame with respect to said at least two reference frames by correlating said current frame (Lc) with a time interpolation of said at least two reference frames (F), said time interpolation being based on correlations between said current frame and respectively each of said at least two reference frames, and on at least one correlation between at least two of said selected reference frames together.

The disclosed method, for time correlation, is applied in a global context and global method which comprises shooting (at least partially) a device on which reference frames of a video are displayed. In the same time, reference frames are transmitted to a device. Using the reference frames which are received and the reference frames which are captured (i.e. shot), pose estimation is done. Globally the pose estimation process consists in aligning, geometrically and temporally, the received referenced frames and the captured referenced frames. Thanks to these two alignments (or synchronizations) the pose of the camera is estimated. This global method allows obtaining a pose estimation, this pose being used to locate objects, for example in augmented reality scenes. The display which is shot by the camera is, according to a global situation, a part of fixed display panel in said environment (for example a TV or a computer screen display). The display panel may also be part of a display set, comprising the display and another device, such as a set top box. In such a situation, the reference frames may be obtained directly from the set top box. In a specific embodiment, the set top box in itself may be able to process the proposed method. In another embodiment, the camera may be included in a user device (smartphone, pad), and the proposed method may be directly processed by this user device. The user device is then in charge of receiving the reference frames and to determine the pose of the user's device camera in view of the reference frames and the captured frames. According to the disclosure, obtaining reference frames may be done in several ways: the first one consists in receiving the reference frames as and when they are transmitted (or displayed) by the display device; this is the case, for example, of a so called "streaming" transmission of the frames to be displayed to a set top box (case of a broadcast for example). A second case may consist in storing the frames (e.g. the movie, the TV show, etc.) and receiving timestamps of the reference frames: the device already has the frames and it receives the information relative to the frames which are (to be) displayed, so that it can process these frames accordingly. A mix of the two previous cases is also possible. The point is that the device which implements the method has to have sufficient information for correlating (in time and in space) current frame and reference frames. Additionally, the pose estimation may have several forms: it may comprise a rigid transformation of one image to one other; it may also comprise a discrete (time) transformation.

In other words, the global method comprises receiving said reference frames from a telecommunication transmission medium, receiving said current frame from said camera, determining said pose estimation with at least one processor and outputting data associated with said pose estimation for providing a user of said camera with information generated partly from said data associated with said pose estimation.

Figure 2 discloses a description of an embodiment of a system in which the proposed technique may be implemented. For clarity, the same references than in figure 1 have been kept. A device *D1* is connected to a display panel *D2* and controls a video playback on this display panel. *D1* has knowledge about the video for at least a time window $W_1$ before and after the currently displayed frame on *D2* *(note that D1 may be directly integrated into D2)*. Let's define *I*, the video, as an array of frames indexed by the frame timestamp.

A user's device *D3* (such as glasses or a tab, smartphone, AR helmet - for Augmented Reality, etc.) is connected to a processing device *D4 (D3 may be the same unit than D4 or integrated into D4)*. D1 and D4, D3 and D4 are connected through a high bandwidth/low latency connection (for example a wireless one).

Whenever asked, *D1* sends to *D4* a set of frames $F$ ($I_{x-n}...I_{x+n}$) covering the current time window $W_1$:

$$F = I[t] \; \forall \; t \; \in W_1$$

$W_1$ is large enough to consider the latency between the display and the tracking process: the purpose is to be sure that - at any time - one of the frames in F is the one displayed on *D2.*

D2 is (at least partially) filmed by the camera (C) of D3, which transmits images data $I_C$ (a set of frames $Ic_{y-m}...Ic_{y+m}$) to the device D4.

*D4* has information about the tracking result at the previous time step. The tracking result is a geometrical transformation between the camera *C* (contained by *D3*) and *D2.* It also has information about the starting and finishing times of the previous camera shutter opening (the time is for example defined by the capture video frames timestamps, or the capture video frame rate).

Using this previous time information and knowledge about the camera shutter (typically the frame rate of the captured images), one can roughly deduce a time window $W_2$ contained in $W_1$:
$card(W_1) \geq card(W_2)$ or $card(W_1) \gg card(W_2)$, depending on implementation.

Knowing $W_2$, $F$ and the images $I_c$ acquired by the camera (which will form the current frame), the proposed technique estimates the relative transformation $^cT_r$, where $\mathcal{F}_r$ is the display panel geometric frame.

Various embodiments of this technique may be implemented. In the following a specific implementation is presented. In this implementation, it is assumed that the camera pose is known for the previous time step (basically, that the transformation $^cT_r$ is known for the previous iteration, i.e. that $^cT_{r(n-1)}$ is known).

In this implementation, the global system is considered to be initialized. It is also assumed that the previous time step pose is relatively close to the current time step pose. Initialization is not covered by this implementation: that means that the previously disclosed technique is not used, in the same way, for determining $^cT_{r(0)}$, the first transformation.

However, according to the disclosure, the initialization (i.e. the obtaining of the first transformation), may be done by using additional data coming both from the camera and the reference frames. Hence, it is proposed to initialize the system with help of the audio stream which is captured along with the captured frames and with the sound which is included in or aside the reference frame. The technique consists in, before the processing applied to the frame, processing the audio stream to obtain the necessary information for coarsely estimating the time at which the capture is done. According to the proposed technique, the audio stream in watermarked, so that estimating the time at which the capture is done only necessitates to periodically find the watermark in the audio stream.

According to the disclosure, in specific embodiments, the frames (reference frames and consequently captured frames) are watermarked. The initialization of the system can also be done by using the watermarked frames, just like audio streams. Advantageously, the watermark technique has two main features: the first one is to be sufficiently resistant for being captured by the camera; the second one is that it evolves in time: that means that, for example, knowing the watermark allows knowing to which frame (or group of frames) it is referenced to. This second feature allows speeding up the pose estimation process, since recognizing the watermark, both in the reference frames and in the captured frames implies that it is easier to timely map these frames, thus, once the frames are timely mapped, the pose estimation may be found by using a geometric transformation.

Considering the previously presented system, let us explain the main steps of the proposed technique in a first embodiment, by using the previous references (of figures 1 and 2, which are applicable to this embodiment).

In a first step (10), reference frames ($F$) are obtained; reference frames belong to a set of reference frame and extend on a given period of time ($W_1$);

In a second step (20), captured frames (Id) are obtained; captured frames belong to a set of captured frames and extend on a given period of time ($W_2$), where $W_2$ is smaller than $W_1$. According to a specific embodiment, one camera frame is acquired to compute one transformation. W2 is a subset of W1 refined using camera information. It limits the set of reference frames which are of interest.

In a third step (30), a time alignment of the current frame (Lc) with respect to the two reference frames ($F$) is made. This time alignment is done by correlating said current frame (Lc) with a time interpolation of at least two reference frames (F1, F2). The time interpolation is based on correlations between said current frame (Lc) and respectively each of said at least two reference frames (F1, F2), and on at least one correlation between at least two of said selected reference frames (F1, F2) together.

Thus the proposed method allows achieving the time correlation in a context of the overall global method proposed herein before.

Additionally, a space correlation is made between reference frames ($F$) and capture frames (Lc) so as to determine a transformation $^cT_{r(n)}$; this transformation being calculated, in a specific embodiment, as a function of a previously obtained transformation ($^cT_{r(n-1)}$). This space correlation is mixed with the time correlation.

Thus, thanks to the proposed technique, the method allows temporally alinging the captured frames obtained by the camera so as to match the reference frames which are obtained by another channel. Matching the two allows finding a transformation which may then be used to render additional digital content in a mixed reality scene: for example, this transformation may be use to change the appearance of a digital object in the scene; the digital object is then correctly oriented in view of the transformation applied on this object. The temporal alignment will be better understood with the following details. $^cK$ is the camera intrinsic matrix which relates some 2D coordinates (in meters) in the camera image plane to their associated pixel coordinates. $^sK$ is the TV intrinsic matrix which relates some 2D coordinates (in meters) in the display (TV panel) plane to their associated video pixel coordinates. As previously introduced, $^cT_s$ is the camera pose homogeneous matrix which relates the display geometric frame $F_s$ to the camera geometric frame $F_c$.

$$^c\mathbf{T}_s = \begin{bmatrix} ^c\mathbf{R}_s & ^c\mathbf{t}_s \\ \mathbf{0} & 1 \end{bmatrix}$$

A homography matrix is computed as

$$^c\mathbf{H}_s = {}^c\mathbf{K}({}^c\mathbf{R}_s + {}^c\mathbf{t}_s[0 \quad 0 \quad 1]) \, {}^s\mathbf{K}^{-1}$$

This homography matrix is used to undistort the display content. $I_c$ is the captured camera image and $I_c(u, v)$ is a pixel value at coordinates [$u, v$]. $I_v$ is the undistorted output image. $I_v$ size is equal to the displayed video size: [w, h].

$$I_v(u, v) = I_c(u_c, v_c) \, \forall \, \begin{matrix} u_c \in [0; w[ \\ v_c \in [0; h[ \end{matrix}$$

$$\begin{bmatrix} u_c \\ v_c \\ 1 \end{bmatrix} \cong {}^c\mathbf{H}_s \begin{bmatrix} u \\ v \\ 1 \end{bmatrix}$$

For temporally aligning the simplest solution is to compare $I_v$ with an ordered set $F$ of possible video frames. However, one must also compare with linear combinations of successive video frames to be able to recognize captured frames (Lc) with this artefact. A straightforward approach would be to create intermediate images (by varying a positioning weight $\alpha$ of reference frames) and to compare all $n$ intermediate generated images:

$$\alpha\, S_i + (1 - \alpha)S_{i+1} \; \forall\, \alpha \in \frac{[1..n]}{n}$$

Each intermediate image would then be compared to the current frame and the best intermediate image would be kept (which would give the best value of the positioning weight $\alpha$). Time alignment would then be done on this basis. However, as previously exposed, the complexity increases linearly with the number of intermediate images, and reducing the number of intermediate images may reduce the matching robustness.

Thanks to the proposed method of the disclosure, this simple (but inefficient) solution is replaced by a correlation calculation, which is more efficient while limiting the number of operation to be done for calculating the optimal positioning weight $\alpha$ directly, with no approximation (no intermediate generated images).

More specifically, according to the disclosure, the two reference frames comprises a previous frame and a next frame (for example two consecutive frames) and the time interpolation is based on:

- a correlation S1 between the previous frame and the current frame;
- a correlation S2 between the next frame and the current frame; and
- a correlation S3 between the previous frame and the next frame.

The time interpolation then corresponds to a linear normalized time positioning weight $\alpha$ between the previous frame and the next frame, said time positioning weight $\alpha$ being given by:

$$\alpha = -\frac{-S_2 S_3 + S_1}{S_1 S_3 + S_2 S_3 - S_1 - S_2}$$

A description of a general context of implementation of the proposed method is disclosed herein after. It has to be understood however, that this specific embodiment does not limit the scope of the disclosure and that the determination of the transformation may be obtained differently in view of specific implementation conditions and parameters.

5.2. Description of a general context of implementation of the proposed method

In a first general context of implementation, a first way of processing the captured frames (from the camera) and the reference frames is disclosed. This first context of implementation takes account of the rendering of the video on the display panel, the time took by the camera for capturing one single frame and the geometrical transformation to operate to the captured frames. These operations are used for matching the captured frame with the reference frames. Various improvements of this specific embodiment are disclosed herein below.

5.2.1. Display video rendering

Image displayed by the display panel (this image is called $L_d$) is not a simple frame of *I*. A display panel has some latency and this latency produces artefacts. *I* is a discrete set of frames. The observation time *t* is defined on a continuous scale and is bounded by the timestamps of two frames:

$$t_a < t < t_b$$

The image $L_d$ is the result of :

$$L_d = f(I[t_a], I[t_b], t, t_a, t_b)$$

Where *f* is a smooth, continuously differentiable (on the domain) function. The function *f* blends $I[t_a]$, $I[t_b]$ together, with $I[t_a]$ being more important if *t* is close to $t_a$ and $I[t_b]$ being more important if *t* is close to $t_b$.

Thus, a first bias of the frames captured by the camera is integrated.

5.2.2. Camera shutter

It has been explained that the camera was shooting, at least partially, the display panel D2. However, the

6

camera image capture is not instantaneous. The shutter stays open for a fixed amount of time $t_s = t_1 - t_0$.

Ignoring the geometric distortion of the display screen in the camera view, the captured image $L_c$ (i.e. the current frame which has to be compared with the reference frames) is:

$$L_c(t_0, t_1) = \int_{t=t_0}^{t_1} f(I[t_a(t)], I[t_b(t)], t, t_a(t), t_b(t))$$

Note that $t_a$ and $t_b$ are functions of the current time $t$ in the integrated part. This means that more than two input frames may be used to form $L_c$. Being able to use more than two input frames is very important as the camera integration time may be higher than the video frame duration. This is for example the case when the display panel D2 displays frames at a 100 Hz rate (100 images per second), whereas the camera captures the displayed frames at a 25 Hz or 30Hz rate (25 or 30 images per second).

Thus, a second bias of the frames capture by the camera is integrated.

### 5.2.3. Geometry

Assume (for simplification) that the reference frame is attached to the top left corner of the display panel D2. The size $(w_m, h_m)$ in meters of the display panel is known $a$ priori. The camera calibration is also known $a$ priori and is defined by the 3x3 matrix $K_{cam}$. The video frames size $(w_v, h_v)$ in pixels is also known $a$ priori.

A 3D point $^rm$, which lies on the display frame, lies on the $Z = 0$ plane:

$$^rm = \begin{bmatrix} ^rX \\ ^rY \\ 0 \end{bmatrix}$$

$^rm$ is any point on the screen. $^rm$ is on the plane (in the geometrical sense) of the display frame, i.e. $Z = 0$ since the mark coincides with the top left corner of the display.

This point may be transformed in the camera frame:

$$^cm = {}^cT_r \; {}^rm$$

The image coordinates are then given by (These are the coordinates of the 3D point $^rm$ when it is transformed in the frame of the camera, projected and modified to take into account the calibration of the camera. This is a point in pixels):

$$\begin{bmatrix} ^cu \\ ^cv \\ 1 \end{bmatrix} = K_{cam} \begin{bmatrix} \dfrac{^cX}{^cZ} \\ \dfrac{^cY}{^cZ} \\ 1 \end{bmatrix} = K_{cam} w\left( \begin{bmatrix} ^cX \\ ^cY \\ ^cZ \end{bmatrix} \right) = K_{cam} w(c_m)$$

The function $w$ represents the perspective projection function. This is the division of the three elements of the vector by the third component.

For each pixel $^rp$ in $L_c$, the associated $^rm$ (in meters) is then:

$$^rp = \begin{bmatrix} ^ru \\ ^rv \\ 1 \end{bmatrix}$$

$$K_{input} = \begin{bmatrix} \dfrac{w_v}{w_m} & 0 & 0 \\ 0 & \dfrac{h_v}{h_m} & 0 \\ 0 & 0 & 1 \end{bmatrix}$$

$$^r m = K_{input}^{-1} \, {}^r p = g(\,{}^r p)$$

This is a second definition. It is explained here how to move from point to pixel in the video at a point in meters in the reference of the screen (ortho reference). "g" is the function that performs this transformation; it is used in the previous equation.

So there are two geometric definitions. A first one that models how the measurement in the image of the camera of a 3D point belonging to the screen is obtained. And a second definition which makes it possible to obtain a point in meters that belongs to the screen according to its coordinates in a reference image (an image of the video).

These two definitions allow to better understand the minimization function below.

5.2.4. Solving the problem

Considering the previous integration of the three biases and neglecting the motion of the camera during the integration time, the system estimates the pose by minimizing this equation:

$$\underset{^c T_r \,,\, t_0, t_1}{\arg\min} \sum_{\substack{0 \le\, ^r v \le h_v \\ 0 \le\, ^r u \le w_v}} (L_c(t_0, t_1, \, {}^r u, \, {}^r v) - I_c\,(K_{cam} w(\,{}^c T_r \;\; g(\,{}^r u, \, {}^r v)))$$

Note that $h_v$ and $w_v$ may not be the real video size but a downsized version to fasten computation, as explained herein below, in specific improvement.

Thus, using this integration technique, one can use a video as a model for pose estimation. In augmented reality for entertainment, this is a strong advantage as one gets rid of external markers and the marker is directly integrated into the context.

5.3. Proof of an embodiment of the proposed temporally alignment method (for two reference frames)

In this section, a proof of an embodiment of the proposed method is made. Let consider images as vectors (losing 2D structures and stacking rows together). A solution to compare two vectors $v_1$ and $v_2$ is cross-correlation:

$$\cos(\widehat{v_1 v_2}) \, |v_1||v_2| = \; v_1 . v_2$$

$$\cos(\widehat{v_1 v_2}) = \frac{v_1 . v_2}{|v_1||v_2|}$$

For images, the basis must be centered for correct assessment of cross-correlation.

$$zncc(v_1, v_2) = \frac{(v_1 - \overline{v_1}) . (v_2 - \overline{v_2})}{|v_1 - \overline{v_1}||v_2 - \overline{v_2}|}$$

Where

$$\overline{x} = \mathbf{1}_{size(x)} \sum_{i=0}^{size(x)} \frac{x(i)}{size(x)}$$

Let consider only two consecutive video reference frames $I_1$ and $I_2$ that will be compared to the undistorted current image $I_v$. (it is assumed that images have been previously centered and normalized for clarity.)

$$\bar{I_v} = \bar{I_1} = \bar{I_2} = 0$$

$$|I_v| = |I_1| = |I_2| = 1$$

$$I_r = \alpha I_1 + (1-\alpha)I_2$$

$$zncc(I_r, I_v) = \frac{I_r.I_v}{|I_r - \bar{I_r}|}$$

$$zncc(I_r, I_v) = \frac{\left((\alpha I_1 + (1-\alpha)I_2) - \overline{(\alpha I_1 + (1-\alpha)I_2)}\right).I_v}{|(\alpha I_1 + (1-\alpha)I_2) - \overline{(\alpha I_1 + (1-\alpha)I_2)}|}$$

As the mean function is distributive over sums:

$$\overline{(\alpha I_1 + (1-\alpha)I_2)} = \alpha\bar{I_1} + (1-\alpha)\bar{I_2} = \mathbf{0}$$

$$zncc(I_r, I_v) = \frac{\left((\alpha I_1 + (1-\alpha)I_2)\right).I_v}{|(\alpha I_1 + (1-\alpha)I_2)|}$$

Expanding,

$$\left((\alpha I_1 + (1-\alpha)I_2)\right).I_v = \alpha I_1 I_v + I_2 I_v - \alpha I_2 I_v$$

$$|(\alpha I_1 + (1-\alpha)I_2)| = \sqrt{(\alpha I_1 + (1-\alpha)I_2).(\alpha I_1 + (1-\alpha)I_2)}$$

$$|(\alpha I_1 + (1-\alpha)I_2)| = \sqrt{(\alpha I_1 + I_2 - \alpha I_2)(\alpha I_1 + I_2 - \alpha I_2)}$$

$$|(\alpha I_1 + (1-\alpha)I_2)| = \sqrt{\alpha^2 I_1 I_1 + 2\alpha I_1 I_2 - 2\alpha^2 I_1 I_2 + I_2 I_2 - 2\alpha I_2 I_2 + \alpha^2 I_2 I_2}$$

$$|(\alpha I_1 + (1-\alpha)I_2)| = \sqrt{\alpha^2 + 2\alpha I_1 I_2 - 2\alpha^2 I_1 I_2 + 1 - 2\alpha + \alpha^2}$$

$$zncc(I_r, I_v) = \frac{\alpha I_1 I_v + I_2 I_v - \alpha I_2 I_v}{\sqrt{\alpha^2 + 2\alpha I_1 I_2 - 2\alpha^2 I_1 I_2 + 1 - 2\alpha + \alpha^2}}$$

Whatever the value of $\alpha$, the following values may be precomputed:

$$S_1 = I_1 I_v$$

$$S_2 = I_2 I_v$$

$$S_3 = I_1 I_2$$

$$\frac{\alpha S_1 + S_2 - \alpha S_2}{\sqrt{2\alpha^2 + 2\alpha S_3 - 2\alpha^2 S_3 + 1 - 2\alpha}}$$

$\alpha$ is defined in [0; 1]. In this interval, $\sqrt{2\alpha^2 + 2\alpha S_3 - 2\alpha^2 S_3 + 1 - 2\alpha}$ has only one extremum (which is a minimum), and $\alpha S_1 + S_2 - \alpha S_2$ is linear.

As such, the maximal value for $zncc(I_r, I_v)$ will be found when $\alpha$ is such that

$$\frac{\partial}{\partial a} zncc(I_r, I_v) = 0$$

Which may be computed in a closed fashion:

$$\alpha = -\frac{-S_2 S_3 + S_1}{S_1 S_3 + S_2 S_3 - S_1 - S_2}$$

It can be noted that computing $S_1$, $S_2$ and $S_3$ would be necessary in any case.

$\alpha$ is not discretized and its optimal value is found using only five (5) multiplications and five (5) additions, which is significantly low, even for a low resources processing device.

For each pair of consecutive frames, the maximal possible score is found without explicit variation of the combination coefficient. Finding the global maximal value is then only a matter of finding the consecutive frames pair with the highest score. Additionally, the proposed method guarantees that no approximation will hide a peak in the score function.

5.4. Device for temporally aligning a current frame with reference frames

The disclosure also proposes a device for temporally aligning a current frame with reference frames. The device can be specifically designed for pose estimation or any electronic device comprising non-transitory computer readable medium and at least one processor configured by computer readable instructions stored in the non-transitory computer readable medium to implement any method in the disclosure.

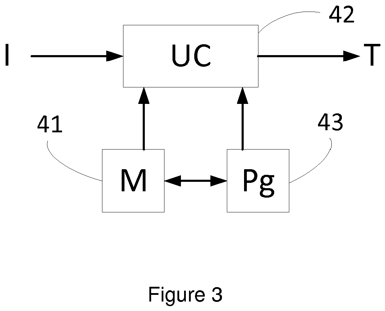

According to an embodiment shown in figure 3, the device for temporally aligning a current frame with reference frames includes a Central Processing Unit (CPU) 42, a Random Access Memory (RAM) 41, a Read-Only Memory (ROM) 43, a storage device which are connected via a bus in such a manner that they can carry out communication among them.

The CPU controls the entirety of the device by executing a program loaded in the RAM. The CPU also performs various functions by executing a program(s) (or an application(s)) loaded in the RAM.

The RAM stores various sorts of data and/or a program(s).

The ROM also stores various sorts of data and/or a program(s) (Pg).

The storage device, such as a hard disk drive, a SD card, a USB memory and so forth, also stores various sorts of data and/or a program(s).

The device performs the method for temporally aligning a current frame with reference frames as a result of the CPU executing instructions written in a program(s) loaded in the RAM, the program(s) being read out from the ROM or the storage device and loaded in the RAM.

More specifically, the device can be a server, a computer, a pad, a smartphone or a camera in itself. The device comprises at least one input adapted for receiving the reference frames, at least one further input adapted to receiving the current frame (e.g. the captured frames), the processor(s) for estimating the pose of the camera, and at least one output adapted to outputting the data associated with the pose estimation. The generated information is advantageously synchronized with the displayed frames for augmented reality, with a view to e.g. advertisement, second screen complements or games, but can also be disconnected from the displayed video.

The disclosure also relates to a computer program product according to claim 12. The computer program product can be recorded on a CD, a hard disk, a flash memory or any other suitable computer readable medium. It can also be downloaded from the Internet and installed in a device so as to estimate the pose of a camera as previously exposed.

According to an embodiment, the method further comprises determining a pose estimation associated with said current frame of the current video stream, from spatially correlating said current frame and said at least two reference frames based on said time alignment.

Thus, thanks to the time aligning, the pose estimation of the camera which has acquired the current frame is made easier.

According to an embodiment, said method is applied to augmented reality or interactivity.

According to a specific feature, determining the time alignment of said current frame is done with respect to a predetermined number of said at least two reference frames.

According to a specific embodiment, predetermined number is two.

According to an embodiment, said two reference frames including a previous frame and a next frame, said time interpolation being based on a correlation S1 between the previous frame and said current frame, a correlation S2 between the next frame and the current frame, and a correlation S3 between the previous frame and the next frame, said time interpolation corresponds to a linear normalized time positioning weight $\alpha$ between the previous frame and the next frame, said time positioning weight $\alpha$ being given by:

$$\alpha = -\frac{-S_2 S_3 + S_1}{S_1 S_3 + S_2 S_3 - S_1 - S_2}$$

According to a specific feature, the time alignment of said current frame being possible with respect to at least two sets of said predetermined number of said at least two reference frames, said method comprises determining said time alignment with respect to one of said sets of said at least two reference frames that provides a highest correlation of said current frame with the time interpolation of said reference frames, among said at least two sets of said at least two reference frames.

According to another feature, determining said time alignment comprises selecting said at least two reference frames within a time window including a current time corresponding to said current frame and having a predetermined time length.

According to an additional feature, said correlations are respectively applied to centered versions of said current frame and said at least two reference frames, a centered version of a frame comprising pixels being given by a difference between said frame and an averaging of said frame over said pixels.

According to an embodiment said at least two reference frames are consecutive in said reference video stream.

According to an embodiment, said current video stream being obtained in real time, determining said time alignment is done in real time.

According to a feature, said current video stream corresponds to an adapted version of said reference video stream.

According to a feature, the method comprises receiving said current video stream and said reference video stream at at least one input, determining said time alignment with at least one processor, and outputting information generated partly from said time alignment at at least one output.

According to another aspect, the disclosure also relates to a device for time aligning frames of video stream according to the previous disclosed methods.

More specifically, according to an embodiment, the disclosure relates to a device for time aligning a current frame of a current video stream with respect to reference frames of a reference video stream according to claim 2.

The device is further advantageously configured for carrying out a method for time aligning frames in any of its above execution modes.

The disclosure is also relevant to a mobile apparatus comprising a camera, and further comprising a device for time aligning frames as mentioned above.

The present disclosure is also related to a computer program product downloadable from a communication network and/or recorded on a medium readable by a computer and/or executable by a processor, comprising program code instructions for implementing the method as described above.

The present disclosure also concerns a non-transitory computer-readable medium comprising a computer program product recorded thereon and capable of being run by a processor, including program code instructions for implementing the method as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read - only memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

The scope of the invention is defined by the appended claims.

**Claims**

1. A method for time aligning a current frame of a current video stream with respect to reference frames of a reference video stream,

   **characterized in that** said method comprises:

   - obtaining (10) two reference frames (F) corresponding to frames of the reference video stream displayed on a display;
   - obtaining (20) the current frame (Lc) from a camera shooting said display;
   - time aligning (30) said current frame (Lc) as a function of a correlation between said current frame (Lc) and each of said two reference frames (F), and of a correlation between the two reference frames (F),

   wherein the method further comprises determining a pose estimation associated with said current frame based on said time aligning.

2. A device for time aligning a current frame of a current video stream with respect to reference frames of a reference video stream, said device comprising at least one processor configured for:

   - obtaining (10) two reference frames (F) corresponding to frames of the reference video stream displayed on a display;
   - obtaining (20) the current frame (Lc) from a camera by shooting said display;
   - time aligning (30) said current frame (Lc) as a function of a correlation between said current frame (Lc) and each of said at least two reference frames (F), and of a correlation between the two reference frames (F),

   wherein the at least one processor is further configured for determining a pose estimation associated with said current frame based on said time aligning.

3. The method according to claim 1 or the device according to claim 2, **characterized in that** the pose estimation associated with said current frame is determined from spatially correlating said current frame and said at least two reference frames based on said time aligning.

4. The method according to claim 1 or 3 or the device according to claim 2 or 3, **characterized in that** said time aligning is an interpolation based on the correlations S1 and S2 between said current frame and each of the two reference frames, and the correlation S3 between the two frames, said interpolation corresponding to a linear normalized time positioning weight $\alpha$ between the two reference frames, said time positioning weight $\alpha$ being given by:

$$\alpha = -\frac{-S_2 S_3 + S_1}{S_1 S_3 + S_2 S_3 - S_1 - S_2}$$

5. The method according to claim 4 or the device according to claim 4, **characterized in that** the time aligning of said current frame is possible with respect to at least two sets of a predetermined number of at least two reference frames, said method comprising determining said time aligning with respect to one of said sets of said at least two reference frames that provides a highest correlation of said current frame with the interpolation of said reference frames, among said at least two sets of said at least two reference frames.

6. The method according to claim 1 or the device according to claim 2, **characterized in that** determining said time aligning comprises selecting said two reference frames within a time window including a current time corresponding to said current frame and having a predetermined time length.

7. The method according to claim 1 or the device according to claim 2, **characterized in that** said correlations are respectively applied to centered versions of said current frame and said two reference frames, a centered version of a frame comprising pixels being given by a difference between said frame and an averaging of said frame over said pixels.

8. The method according to claim 1 or the device according to claim 2, **characterized in that** said two reference frames are consecutive in said reference video stream.

9. The method according to claim 1 or the device according to claim 2, **characterized in that** said current video stream is obtained in real time, determining said time alignment being performed in real time.

10. The method according to claim 1 or the device according to claim 2 **characterized in that** said current video stream corresponds to an adapted version of said reference video stream.

11. A mobile apparatus, **characterized in that** it comprises a device according to any of claims 2 to 10.

12. A computer program product comprising computer executable program code recorded on a computer readable non-transitory storage medium, the computer executable program code when executed, performing any method according to any of claims 1 or 3 to 10.


**Patentansprüche**

1. Verfahren für die zeitliche Ausrichtung eines gegenwärtigen Einzelbilds eines gegenwärtigen Videostroms in Bezug auf Referenzeinzelbilder eines Referenzvideostroms, **dadurch gekennzeichnet, dass** das Verfahren umfasst:

   - Erhalten (10) zweier Referenzeinzelbilder (F), die Einzelbildern des auf einer Anzeige angezeigten Referenzvideostroms entsprechen;
   - Erhalten (20) des gegenwärtigen Einzelbilds (Lc) von einer Kamera, die die Anzeige filmt;
   - zeitliches Ausrichten (30) des gegenwärtigen Einzelbilds (Lc) in Abhängigkeit von einer Korrelation zwischen dem gegenwärtigen Einzelbild (Lc) und jedem der zwei Referenzeinzelbilder (F) und von einer Korrelation zwischen den zwei Referenzeinzelbildern (F),

   wobei das Verfahren ferner das Bestimmen einer dem gegenwärtigen Einzelbild zugeordneten Poseschätzung auf der Grundlage der zeitlichen Ausrichtung umfasst.

2. Vorrichtung für die zeitliche Ausrichtung eines gegenwärtigen Einzelbilds eines gegenwärtigen Videostroms in Bezug auf Referenzeinzelbilder eines Referenzvideostroms, wobei die Vorrichtung mindestens einen Prozessor umfasst, der konfiguriert ist zum:

   - Erhalten (10) zweier Referenzeinzelbilder (F), die Einzelbildern des auf einer Anzeige angezeigten Referenzvideostroms entsprechen;
   - Erhalten (20) des gegenwärtigen Einzelbilds (Lc) von einer Kamera durch Filmen der Anzeige;
   - zeitliches Ausrichten (30) des gegenwärtigen Einzelbilds (Lc) in Abhängigkeit von einer Korrelation zwischen dem gegenwärtigen Einzelbild (Lc) und jedem der mindestens zwei Referenzeinzelbilder (F) und von einer Korrelation zwischen den zwei Referenzeinzelbildern (F),

   wobei der mindestens eine Prozessor ferner dafür konfiguriert ist, auf der Grundlage der zeitlichen Ausrichtung eine dem gegenwärtigen Einzelbild zugeordnete Poseschätzung zu bestimmen.

3. Verfahren nach Anspruch 1 oder Vorrichtung nach Anspruch 2, **dadurch gekennzeichnet, dass** die dem gegenwärtigen Einzelbild zugeordnete Poseschätzung aus dem räumlichen Korrelieren des gegenwärtigen Einzelbilds und der mindestens zwei Referenzeinzelbilder auf der Grundlage der zeitlichen Ausrichtung bestimmt wird.

4. Verfahren nach Anspruch 1 oder 3 oder Vorrichtung nach Anspruch 2 oder 3, **dadurch gekennzeichnet, dass** die zeitliche Ausrichtung eine Interpolation auf der Grundlage der Korrelationen S1 und S2 zwischen dem gegenwärtigen

**EP 3 522 114 B1**

Einzelbild und jedem der zwei Referenzeinzelbilder und der Korrelation S3 zwischen den zwei Einzelbildern ist, wobei die Interpolation einem linear normierten Gewicht α der zeitlichen Positionierung zwischen den zwei Referenzeinzelbildern entspricht, wobei das Gewicht α der zeitlichen Positionierung gegeben ist durch:

$$\alpha = -\frac{-S_2S_3 + S_1}{S_1S_3 + S_2S_3 - S_1 - S_2}.$$

5. Verfahren nach Anspruch 4 oder Vorrichtung nach Anspruch 4, **dadurch gekennzeichnet, dass** das zeitliche Ausrichten des gegenwärtigen Einzelbilds in Bezug auf mindestens zwei Mengen einer vorgegebenen Anzahl von mindestens zwei Referenzeinzelbildern möglich ist, wobei das Verfahren das Bestimmen der zeitlichen Ausrichtung in Bezug auf eine der Mengen der mindestens zwei Referenzeinzelbilder umfasst, die unter den mindestens zwei Mengen der mindestens zwei Referenzeinzelbilder eine höchste Korrelation des gegenwärtigen Einzelbilds mit der Interpolation der Referenzeinzelbilder bereitstellt.

6. Verfahren nach Anspruch 1 oder Vorrichtung nach Anspruch 2, **dadurch gekennzeichnet, dass** das Bestimmen der zeitlichen Ausrichtung das Auswählen der zwei Referenzeinzelbilder in einem Zeitfenster, das einen gegenwärtigen Zeitpunkt enthält, der dem gegenwärtigen Einzelbild entspricht, und das eine vorgegebene Zeitdauer aufweist, umfasst.

7. Verfahren nach Anspruch 1 oder Vorrichtung nach Anspruch 2, **dadurch gekennzeichnet, dass** die Korrelationen auf zentrierte Versionen des gegenwärtigen Einzelbilds bzw. der zwei Referenzeinzelbilder angewendet werden, wobei eine zentrierte Version eines Einzelbilds Pixel umfasst, die durch eine Differenz zwischen dem Einzelbild und einer Mittelung des Einzelbilds über die Pixel gegeben sind.

8. Verfahren nach Anspruch 1 oder Vorrichtung nach Anspruch 2, **dadurch gekennzeichnet, dass** die zwei Referenzeinzelbilder in dem Referenzvideostrom aufeinanderfolgend sind.

9. Verfahren nach Anspruch 1 oder Vorrichtung nach Anspruch 2, **dadurch gekennzeichnet, dass** der gegenwärtige Videostrom in Echtzeit erhalten wird, wobei die Bestimmung der zeitlichen Ausrichtung in Echtzeit ausgeführt wird.

10. Verfahren nach Anspruch 1 oder Vorrichtung nach Anspruch 2, **dadurch gekennzeichnet, dass** der gegenwärtige Videostrom einer angepassten Version des Referenzvideostroms entspricht.

11. Mobiles Gerät, **dadurch gekennzeichnet, dass** es eine Vorrichtung nach einem der Ansprüche 2 bis 10 umfasst.

12. Computerprogrammprodukt, das durch einen Computer ausführbaren Programmcode umfasst, der auf einem computerlesbaren nichttransitorischen Speichermedium aufgezeichnet ist, wobei der durch einen Computer ausführbare Programmcode, wenn er ausgeführt wird, ein Verfahren nach einem der Ansprüche 1 oder 3 bis 10 ausführt.

**Revendications**

1. Procédé d'alignement temporel d'une trame actuelle d'un flux vidéo actuel par rapport à des trames de référence d'un flux vidéo de référence, **caractérisé en ce que** ledit procédé comprend :

    - l'obtention (10) de deux trames de référence (F) correspondant aux trames du flux vidéo de référence affiché sur un écran ;
    - l'obtention (20) de la trame actuelle (Lc) à partir d'un appareil photo capturant ledit écran ;
    - l'alignement temporel (30) de ladite trame actuelle (Lc) en fonction d'une corrélation entre ladite trame actuelle (Lc) et chacune desdites deux trames de référence (F) et d'une corrélation entre les deux trames de référence (F), dans lequel le procédé comprend en outre la détermination d'une estimation de pose associée à ladite trame actuelle en fonction dudit alignement temporel.

2. Dispositif d'alignement temporel d'une trame actuelle d'un flux vidéo actuel par rapport à des trames de référence d'un flux vidéo de référence, ledit dispositif comprenant au moins un processeur configuré pour :

    - l'obtention (10) de deux trames de référence (F) correspondant aux trames du flux vidéo de référence affiché

14

sur un écran ;

- l'obtention (20) de la trame actuelle (Lc) à partir d'un appareil photo en capturant ledit écran ;

- l'alignement temporel (30) de ladite trame actuelle (Lc) en fonction d'une corrélation entre ladite trame actuelle (Lc) et chacune desdites au moins deux trames de référence (F) et d'une corrélation entre les deux trames de référence (F),

dans lequel l'au moins un processeur est en outre configuré pour déterminer une estimation de pose associée à ladite trame actuelle en fonction dudit alignement temporel.

3. Procédé selon la revendication 1 ou dispositif selon la revendication 2, **caractérisé en ce que** l'estimation de pose associée à ladite trame actuelle est déterminée à partir de la corrélation spatiale de ladite trame actuelle et desdites au moins deux trames de référence en fonction dudit alignement temporel.

4. Procédé selon la revendication 1 ou 3 ou dispositif selon la revendication 2 ou 3 **caractérisé en ce que** ledit alignement temporel est une interpolation basée sur les corrélations S1 et S2 entre ladite trame actuelle et chacune des deux trames de référence, et la corrélation S3 entre les deux trames, ladite interpolation correspondant à une pondération de positionnement temporel normalisée linéaire $\alpha$ entre les deux trames de référence, ladite pondération de positionnement temporel $\alpha$ étant obtenue par :

$$\alpha = -\frac{-S_2 S_3 + S_1}{S_1 S_3 + S_2 S_3 - S_1 - S_2}$$

5. Procédé selon la revendication 4 ou dispositif selon la revendication 4, **caractérisé en ce que** l'alignement temporel de ladite trame actuelle est possible par rapport à au moins deux ensembles d'un nombre prédéterminé d'au moins deux trames de référence, ledit procédé comprenant la détermination dudit alignement temporel par rapport à l'un desdits ensembles desdites au moins deux trames de référence qui fournit une corrélation supérieure de ladite trame actuelle avec l'interpolation desdites trames de référence, parmi lesdits au moins deux ensembles desdites au moins deux trames de référence.

6. Procédé selon la revendication 1 ou dispositif selon la revendication 2, **caractérisé en ce que** la détermination dudit alignement temporel comprend la sélection desdites deux trames de référence dans une fenêtre temporelle incluant une heure actuelle correspondant à ladite trame actuelle et présentant une durée prédéterminée.

7. Procédé selon la revendication 1 ou dispositif selon la revendication 2, **caractérisé en ce que** lesdites corrélations sont respectivement appliquées à des versions centrées de ladite trame actuelle et auxdites deux trames de référence, une version centrée d'une trame comprenant des pixels obtenus par une différence entre ladite trame et une moyenne de ladite trame sur lesdits pixels.

8. Procédé selon la revendication 1 ou dispositif selon la revendication 2, **caractérisé en ce que** lesdites deux trames de référence sont consécutives dans ledit flux vidéo de référence.

9. Procédé selon la revendication 1 ou dispositif selon la revendication 2, **caractérisé en ce que** ledit flux vidéo actuel est obtenu en temps réel, la détermination dudit alignement temporel étant effectuée en temps réel.

10. Procédé selon la revendication 1 ou dispositif selon la revendication 2, **caractérisé en ce que** ledit flux vidéo actuel correspond à une version adaptée dudit flux vidéo de référence.

11. Appareil mobile, **caractérisé en ce qu'**il comprend un dispositif selon l'une quelconque des revendications 2 à 10.

12. Programme informatique comprenant un code de programme exécutable sur ordinateur enregistré sur un support de stockage lisible sur ordinateur non transitoire, le code de programme exécutable sur ordinateur, lorsqu'il est exécuté, mettant en œuvre un procédé selon l'une quelconque des revendications 1 ou 3 à 10.

| F | → | 10 |
| | | ↓ |
| | | 20 | ← | $L_C$ |
| | | ↓ |
| F | → | 30 | ← |
| | | ↓ |
| | | TAL |

Figure 1

Figure 2

I → UC → T

M ↔ Pg

41    42    43

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6297852 B1

**Non-patent literature cited in the description**

- **KAWAKITA HIROYUKI et al.** Augmented TV: An augmented reality system for TV programs beyond the TV screen. *International Conference on Multimedia Computing and Systems,* 2014

- **GOSHIRO YAMAMOTO et al.** Imperceptible On-Screen Markers for Mobile Interaction on Public Large Displays. *IEICE Transactions on Information and Systems,* 2017